# EUROPÄISCHE PATENTANMELDUNG

(11) **EP 2 009 322 A2**
(43) Veröffentlichungstag der Anmeldung: **31.12.2008**
(21) Anmeldenummer: 08157530.0
(22) Anmeldetag: 04.06.2008
(51) Int. Cl.: F16F 9/32

(54) **Kolben-Zylinderaggregat**

(30) Priorität: 30.06.2007 DE 102007030549
(71) Anmelder: ZF Friedrichshafen AG, 88038 Friedrichshafen (DE)
(72) Erfinder: Handke, Günther, 97502 Euerbach (DE)

(57) **Zusammenfassung**

Verfahren zur Herstellung eines Kolben-Zylinderaggregats, umfassend ein Zylinderrohr, in dem eine Kolbenstange axial beweglich angeordnet ist, wobei das Zylinderrohr sowie die Kolbenstange zumindest teilweise von einer Feder umgeben sind, die zwischen einem kolbenstangenseitig festem und einem zylinderseitig festem Bauteil verspannbar ist, wobei das zylinderseitig feste Bauteil als ein Federteller ausgebildet ist, der über eine Oberflächenbeschichtung verfügt und der Federteller mittels einer radial wirkenden Magnetkraft zumindest mittelbar am Zylinderrohr fixiert wird.

## Beschreibung

Die Erfindung betrifft ein Kolben-Zylinderaggregat gemäß dem Oberbegriff von Patentanspruch 1.

Kolben-Zylinderaggregate, in Form von Federdämpfern bzw. Federbeinmodulen, sind aus dem Stand der Technik hinlänglich bekannt und weisen sich besonders wegen ihrer kompakten Bauweise vorteilhaft aus.

Der Federdämpfer bzw. das Federbeinmodul setzt sich im Wesentlichen aus einer Schraubenfeder, die eine Dämpfungseinrichtung umgibt, zusammen. Die Dämpfungseinrichtung umfasst im Allgemeinen ein Zylinderrohr, in dem ein Kolbenventil an einer Kolbenstange axial beweglich angeordnet ist und das mit Dämpfmedium gefüllte Zylinderrohr in zwei Arbeitsräume unterteilt. Die Kolbenstange tritt teilweise einseitig aus dem Zylinderrohr aus. Die Schraubenfeder ist zwischen zwei Federtellern vorgespannt, die sich einerseits am Zylinderrohr und andererseits ortsfest zu der Kolbenstange axial abstützt. Da die Federteller bedingt durch ihre Anordnung Umgebungsbedingungen, unter anderem Feuchtigkeit, ausgesetzt sind, werden sie in der Praxis mit einer vor Korrosion schützenden Lackierung versehen. Neben dem Korrosionsschutz spielt auch die bessere Optik eine große Rolle.

Häufig wird dafür ein Verzinken der Federteller vorgenommen. Es bestünde natürlich die Möglichkeit z.B. einen Nirosta-Stahl, oder Aluminium zu verwenden, was aber aus Kosten, oder aber auch Festigkeitsgründen in Großserienproduktionen nicht immer umsetzbar ist.

Zur Befestigung des Federtellers am Zylinderrohr beschreibt die DE 41 22 789 C2 ein Verfahren, bei der die Befestigung mittels Laserschweißen vorgenommen wird. Dabei ist am Federteller eine Bandage ausgebildet, die den Verbindungsbereich mit dem Zylinderrohr kennzeichnet. Die Einbrandtiefe der Schweißung ist der Materialstärke des Zylinderrohres und der Bandage des Federtellers angepasst. Dadurch wird ein möglicher Verzug des Zylinderrohres durch zu große Wärmeeinwirkung vermieden.

Alternativ wird in der DE 32 30 936 A1 eine Schraubenfederanordnung offenbart, bei der der Federteller mittelbar über einen separaten Ring am Zylinderrohr befestigt ist, wobei der separate Ring durch Punktverschweißung oder dergleichen am Zylinderrohr fixiert ist.

Bei beiden Schweißverfahren ist das Anbringen eines beschichteten Federtellers jedoch nicht möglich, da die schützende Lackierung durch die Hitzeeinwirkung abschmelzen würde und somit kein Korrosionsschutz mehr besteht. Eine nachträgliche Lackierung der montierten Federteller am Zylinderrohr erhöht den Arbeits- und folglich auch den Kostenaufwand.

Als weitere Alternative ist in der DE 198 51 019 C1 die Befestigung einer "Federtellerbaugruppe" mittels mechanischen Umformwerkzeug offenbart. Die "Federtellerbaugruppe" umfasst einen Federteller, der sich auf einer Stützfläche eines Hülsenabschnitts abstützt. Der Hülsenabschnitt wird mittelbar über einen Tragring am Zylinderrohr fixiert. Dabei wird durch eine radial wirkende Kraft eines Prägewerkzeugs der Hülsenabschnitt in eine vorgefertigte Nut des Tragrings formschlüssig gepresst und so axial fixiert.

Durch den direkten Kontakt des Prägewerkzeuges bei dieser Befestigungsmethode, kann es bei lackierten Bauteilen jedoch zu einem Abrieb der Lackschicht kommen, was unter Realbedingungen ein Korrodieren des Hülsenabschnitts zur Folge haben kann.

Die DE 10 2005 041 086 A1 offenbart ein Kolben-Zylinderaggregat, in Form eines Zweirohrschwingungsdämpfers, bei dem mittels einer radial wirkenden Magnetkraft ein äußeres Rohr mit einer Verschlusskappe verschlossen wird. Dabei wird die mit Vorsprüngen versehene Verschlusskappe auf das äußere Rohr aufgesetzt. Das äußere Rohr ist entsprechend zu den Vorsprüngen der Verschlusskappe mit Ausnehmungen versehen. Eine Magnetspule ist radial um die Verschlusskappe angeordnet und erzeugt unter Strombeaufschlagung die radial wirkende Magnetkraft, die die Vorsprünge der Verschlusskappe in die Ausnehmungen des äußeren Rohres hineinverformt und somit die Elemente miteinander formschlüssig verbindet.

Die Aufgabe der vorliegenden Erfindung besteht darin ein Fertigungsverfahren für Kolben- Zylinderaggregate zur Anbringung eines Federtellers bereit zustellen, welches die aus dem Stand der Technik bekannten Probleme behebt.

Erfindungsgemäß wird die Aufgabe dadurch gelöst, dass der Federteller mittels einer radial wirkenden Magnetkraft zumindest mittelbar am Zylinderrohr fixiert wird.

Der große Vorteil besteht darin, dass eine Fixierung ohne jeglichen mechanischen Kontakt, oder eine übermäßige Wärmeeinwirkung auf den Federteller, erfolgen kann. Dadurch werden jegliche Oberflächenverunreinigungen oder Oberflächenbeschädigungen von vornherein vermieden. Somit wird ermöglicht, dass ein Federteller bereits vor der Montage am Zylinderrohr mit z.B. einer Zinkschicht versehen wird, was den Beschichtungsvorgang und den weiteren Montagevorgang erheblich vereinfacht. Die aufgebrachte Beschichtung hat keinen Einfluss auf das Verfahren.

Die radial wirkende Magnetkraft auf den Federteller, wird unter Erzeugung eines Magnetfeldes in Wechselwirkung mit einem induzierten elektrischen Strom im Federteller hervorgerufen. Um das Verfahren möglichst einfach umsetzen zu können ist es von Vorteil den Federteller aus einem elektrisch leitenden Material herzustellen.

Vorteilhafterweise kann das Verfahren jedoch auch mit einem Federteller aus einem beliebigen Material durchgeführt werden, wenn der Federteller während der Prozessdurchführung von einer elektrisch leitenden Hülle umgeben wird. Dadurch ist man vom Parameter der elektrischen Leitfähigkeit weitestgehend unabhängig und kann auf ein breiteres Spektrum von Materialien zurückgreifen.

Um eine größere Stabilität im Fixierungsbereich des Federtellers am Zylinderrohr zu erreichen, weist der Federteller eine umlaufende Anlagefläche auf, die sich axial erstreckt und im Wesentlichen parallel zur Längsachse des Zylinderrohres verläuft.

Vorteilhafterweise verfügt das Zylinderrohr über eine umlaufende Nut, in die die Anlagefläche des Federtellers bei der Prozessdurchführung formschlüssig hineinverformt wird. Damit ist der zylinderseitige Federteller unter Beaufschlagung mit der Feder axial gesichert.

Da ein Kolben-Zylinderaggregat und somit auch der Federteller z.B. während des Betriebs eines Fahrzeugs ständigen Vibrationen ausgesetzt ist, ist es von Vorteil, die umlaufende Nut mit partiellen Unterbrechungen zu versehen. Dadurch ist neben einer axialen Sicherung auch eine radiale Verdrehsicherung gewährleistet.

Als Alternative hierzu kann dass das Zylinderrohr ebenso über mindestens zwei Nuten in einer Ebene in Umfangsrichtung verfügen, die eine Schräglage zur Längsachse des Zylinderrohres aufweisen, in die die Anlagefläche bei der Prozessdurchführung formschlüssig hineinverformt wird.

Die Erfindung ist nachstehend anhand von einem Ausführungsbeispiel noch ausführlicher erläutert.

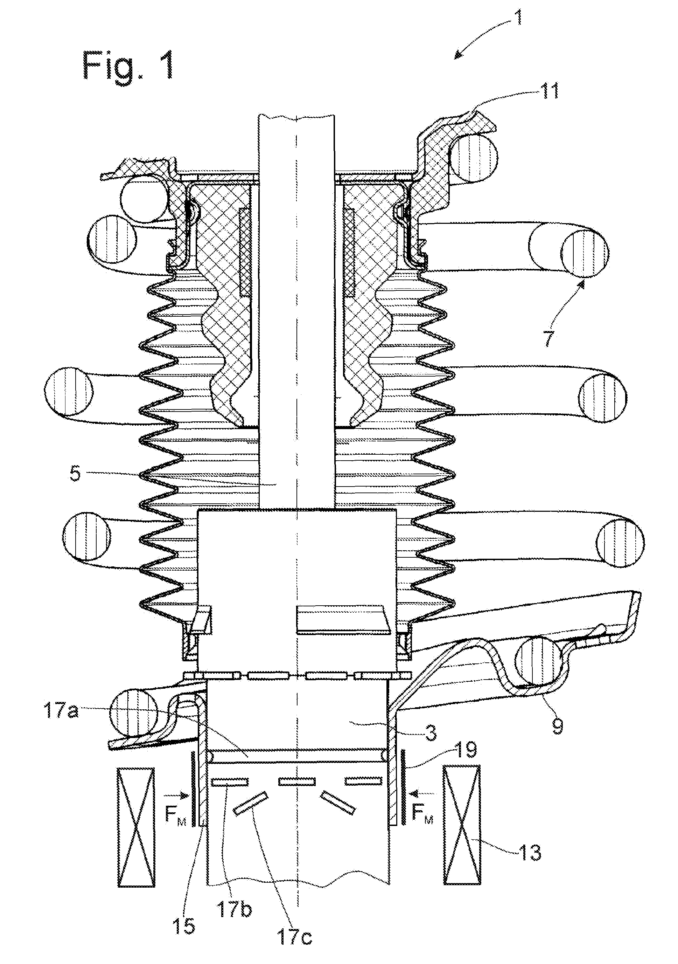

Die Figur zeigt einen Ausschnitt eines Kolben- Zylinderaggregats 1, beispielhaft in der Form eines Federbeins. Es besteht im Wesentlichen aus einem Zylinderrohr 3, einer Kolbenstange 5 und einem daran angebrachten Dämpfungskolben. Eine Feder 7 stützt sich zylinderseitig über einen Federteller 9 am Zylinderrohr 3 ab und ist über einen weiteren Federteller 11 verspannt. Die Federteller 9,11 sind zum Schutz vor Korrosion verzinkt.

Nach dem erfindungsgemäßen Verfahren wird der Federteller 9 mittels einer Magnetumformvorrichtung 13 in Form einer Spulenanordnung am Zylinderrohr 3 fixiert. Die Magnetumformvorrichtung 13 ist der Bauteilgeometrie, also dem Federteller 9 auf Höhe einer Anlagefläche 15 und dem Zylinderrohr 3 entsprechend angepasst, sodass sie die Bauteile koaxial umschließt.

Wird die Spulenanordnung von einem elektrischen Strom durchflossen, wird ein Magnetfeld erzeugt, das in der Anlagefläche 15 einem dem Spulenstrom entgegengesetzen Strom induziert, auf den das Magnetfeld radial wirkende Kräfte FM ausübt. Diese magnetischen Kräfte bewirken eine radiale Deformation der Anlagefläche 15, sodass sie sich in mindestens eine am Zylinderrohr 3 ausgebildete Nut 17 formschlüssig hineinverformt. Beispielhaft werden drei mögliche Ausführungsformen der Nut aufgezeigt. Die Nut 17a entspricht einer komplett umlaufenden Ringnut zur axialen Sicherung des Federtellers 11. Die Nut 17b weist partielle Unterbrechungen auf, während die Nuten 17c eine Schräglage zur Längsachse des Zylinders aufweisen. Letztere ermöglichen neben einer axialen Sicherung zusätzlich eine radiale Verdrehsicherung.

Wird für den Federteller 9 ein Material mit einer sehr schlechten oder keiner elektrische Leitfähigkeit verwendet, kann unter zu Hilfenahme einer Hülle 19, aus z.B. Aluminium, das Verfahren problemlos durchgeführt werden. Die radial wirkende Magnetkraft FM wirkt so über die Hülle 19 mittelbar auf die Anlagefläche 15 des Federtellers 9.

## Patentansprüche

1. Verfahren zur Herstellung eines Kolben-Zylinderaggregats (1), umfassend ein Zylinderrohr (3), in dem eine Kolbenstange (5) axial beweglich angeordnet ist, wobei das Zylinderrohr (3) sowie die Kolbenstange (5) zumindest teilweise von einer Feder (7) umgeben sind, die zwischen einem kolbenstangenseitig festem und einem zylinderseitig festem Bauteil verspannbar ist, wobei das zylinderseitig feste Bauteil als ein Federteller (9) ausgebildet ist, der über eine Oberflächenbeschichtung verfügt,
**dadurch gekennzeichnet,**
**dass** der Federteller (9) mittels einer radial wirkenden Magnetkraft FM zumindest mittelbar am Zylinderrohr (3) fixiert wird.

2. Verfahren zur Herstellung eines Kolben- Zylinderaggregat nach Anspruch 1,
**dadurch gekennzeichnet,**
**dass** für den Federteller (9) ein elektrisch leitendes Material verwendet wird.

3. Verfahren zur Herstellung eines Kolben- Zylinderaggregat nach Anspruch 1,
**dadurch gekennzeichnet,**
**dass** für den Federteller (9) ein beliebiges Material verwendet wird, wobei der Federteller (9) zur Prozessdurchführung von einer elektrisch leitenden Hülle (19) umgeben wird.

4. Verfahren zur Herstellung eines Kolben- Zylinderaggregat nach einem der Ansprüche 1 bis 3,
**dadurch gekennzeichnet,**
**dass** der Federteller (9) eine umlaufende Anlagefläche (15) aufweist, die sich axial erstreckt und im Wesentlichen parallel zur Längsachse des Zylinderrohres (3) verläuft.

5. Verfahren zur Herstellung eines Kolben- Zylinderaggregat nach mindestens einem der Ansprüche 1 bis 4,
**dadurch gekennzeichnet,**
**dass** das Zylinderrohr (3) über mindestens eine umlaufende Nut (17a) verfügt, in die die Anlagefläche (15) bei der Prozessdurchführung formschlüssig hineinverformt wird.

6. Verfahren zur Herstellung eines Kolben- Zylinderaggregat nach Anspruch 5,
**dadurch gekennzeichnet,**
**dass** die mindestens eine umlaufende Nut (17b) partielle Unterbrechungen aufweist.

7. Verfahren zur Herstellung eines Kolben- Zylinderaggregat nach mindestens einem der Ansprüche 1 bis 4,
**dadurch gekennzeichnet,**
**dass** das Zylinderrohr (3) über mindestens zwei Nuten (17c) in einer Ebene in Umfangsrichtung verfügt, die eine Schräglage zur Längsachse des Zylinderrohres (3) aufweisen, in die die Anlagefläche (15) bei der Prozessdurchführung formschlüssig hineinverformt wird.
